# EUROPÄISCHE PATENTSCHRIFT

(11) **EP 2 585 742 B1**
(45) Veröffentlichungstag und Bekanntmachung des Hinweises auf die Patenterteilung: **02.04.2014**
(21) Anmeldenummer: 11724562.1
(22) Anmeldetag: 10.06.2011
(51) Int. Cl.: F16K 11/20, F16K 31/44, B01D 35/12

(54) **SCHALTVORRICHTUNG FÜR EINEN FLUIDSTROM**
SWITCHING APPARATUS FOR A FLUID FLOW
DISPOSITIF DE COMMUTATION POUR UN ÉCOULEMENT DE FLUIDE

(30) Priorität: 25.06.2010 DE 102010025153
(43) Veröffentlichungstag der Anmeldung: 01.05.2013
(73) Patentinhaber: Hydac Process Technology GmbH, 66538 Neunkirchen (DE)
(72) Erfinder: SCHLICHTER, Bernhard, 66123 Saarbrücken (DE); DEUTSCHMEYER, Manfred, 66706 Perl (DE)
(74) Vertreter: Bartels, Martin Erich Arthur
(86) Internationale Anmeldenummer: PCT/EP2011/002852
(87) Internationale Veröffentlichungsnummer: WO 2011/160780

(56) Entgegenhaltungen:
- EP-A2- 1 731 809
- WO-A1-01/29467
- GB-A- 2 236 829
- US-A- 4 429 711

## Beschreibung

Die Erfindung betrifft eine Schaltvorrichtung für einen Fluidstrom, insbesondere für die Leitung eines unter hohem Druck stehenden Fluids von einer ersten Behandlungseinrichtung zu einer zweiten Behandlungseinrichtung, wobei in jeder Behandlungseinrichtung das Fluid einem chemischen und/oder physikalischen Prozessschritt unterzogen werden kann, gemäß der Merkmalsausgestaltung des Oberbegriffes des Patentanspruches 1.

Aus der DE 600 05 552 T2 ist eine gattungsgemäße Schaltvorrichtung bekannt, bei der ein unter hohem Druck stehendes Fluid wahlweise durch eine erste oder eine zweite Behandlungseinrichtung, in der das Fluid eine Behandlung wie etwa eine Filtrierung erfährt, geführt werden kann. Hierzu sind die beiden Behandlungseinrichtungen über eine erste und eine zweite fluidführende Verbindung miteinander verbindbar. In der ersten fluidführenden Verbindung ist bei der bekannten Lösung ungefähr mittig ein Auslassventil für behandeltes Fluid und ungefähr mittig in der zweiten fluidführenden Verbindung ein Einlassventil für zu behandelndes Fluid vorgesehen. Beidseitig zu dem Einlass und dem Auslassventil benachbart ist in beiden fluidführenden Verbindungen jeweils ein Sicherheitsventil vorgesehen, über das die Behandlungseinrichtungen mit dem über das Einlassventil zugeführten Fluid versorgt werden können und bezüglich der anderen fluidführenden Verbindung behandeltes Fluid von den Behandlungseinrichtungen dem Auslassventil zugeführt werden kann. Bei der bekannten Lösung sind das Einlass- und das Auslassventil sowie die den beiden Behandlungseinrichtungen jeweils paarweise zugeordneten zwei Sicherheitsventile jeweils über eine die Ventilpaare koppelnde Welle miteinander verbunden. Zur Änderung der Schaltposition von in den Ventilen angeordneten Ventilelementen ist mit den Wellen jeweils ein Schalthebel verbunden, über den die Welle gedreht werden kann. Die Wellen sind über Kulissenführungen dergestalt zwangsgekoppelt, dass eine Betätigung der Ventilpaare nur in einer vorgegebenen Reihenfolge vorgenommen werden kann. Bei der bekannten Lösung sind sowohl an die koppelnden Wellen als auch an die zur Anordnung der Ventile vorgesehenen fluidführenden Verbindungen hohe Qualitätsanforderungen hinsichtlich der Toleranz bei der Fertigung und Montage zu stellen, damit die jeweils miteinander gekoppelten Ventile genau koaxial zur Welle angeordnet sind und dergestalt möglichst hemmnisarm durch eine Bedienperson betätigbar sind.

Ausgehend von dem Stand der Technik liegt der Erfindung die Aufgabe zugrunde, eine Schaltvorrichtung für einen Fluidstrom zur Verfügung zu stellen, die eine vereinfachte Fertigung und Montage zulässt und dennoch einen sicheren Betrieb, insbesondere eine zuverlässige Kopplung der Bewegung von Ventilpaaren gewährleistet.

Eine dahingehende Aufgabe wird mit einer Schaltvorrichtung mit den Merkmalen des Patentanspruchs 1 in seiner Gesamtheit gelöst. Dadurch dass ein den ersten und zweiten Verteilerventilen zugeordnetes erstes Paar Schalthebel und ein den dritten und vierten Verteilerventilen zugeordnetes zweites Paar Schalthebel vorgesehen und derart in unterschiedlichen Ebenen angeordnet sind, dass die Schalthebel des erstes Paares unbehindert von den Schalthebeln des zweiten Paares, und umgekehrt, von einer Bedienperson betätigbar sind, ist gewährleistet, dass auch ohne das Vorsehen einer koppelnden

Welle zwischen dem ersten und dem dritten Verteilerventil bzw. zwischen dem zweiten und dem vierten Verteilerventil die Schaltpositionen der Ventilelemente der Verteilerventile zuverlässig durch eine Bedienperson geändert werden können. Durch das paarweise Anordnen der Schalthebel in unterschiedlichen Ebenen ist ein von den Schalthebeln des zweiten Paares unbehindertes Betätigen der Schalthebel des ersten Paares, und umgekehrt, sichergestellt.

In einer Ausführungsform definieren das erste und das zweite Paar Schalthebel für das Betätigen des jeweils zugeordneten Verteilerventilpaares von einer Fluid durchlassenden Stellung in eine Fluid sperrende Stellung und umgekehrt einen dem ersten Paar Schalthebel zugeordneten ersten Schwenkbereich und einen dem zweiten Paar Schalthebel zugeordneten zweiten Schwenkbereich, die sich in der Projektion teilweise überlagern und durch die Anordnung des ersten und des zweiten Paares Schalthebel in unterschiedlichen Ebenen kann jedes der beiden Paare in jeder Betätigungsstellung kollisionsfrei in den Schwenkbereich des jeweils anderen Paares Schalthebel eintreten. Hierdurch ist auch bei dem Vorliegen von großen Schwenkbereichen eine sichere Betätigbarkeit der Schaltvorrichtung gewährleistet, so dass auch bei räumlich ausgedehnten Schalthebeln, die zu einer geringeren von der Bedienperson aufzubringenden Kraft führen, die kollisionsfreie und zuverlässige Betätigbarkeit der Schaltvorrichtung gewährleistet ist.

In einer Ausführungsform sind die Schalthebel des ersten Paares und die Schalthebel des zweiten Paares derart angeordnet, dass beide Schalthebel eines Paares jeweils mit einer Hand einer Bedienperson über den gesamten Schwenkbereich gemeinsam betätigbar sind. Hierdurch ist eine einfache Betätigbarkeit erreicht, insbesondere eine, die trotz der Verwendung von jeweils zwei Schalthebeln für ein zugeordnetes Verteilerventilpaar eine effiziente und zügige Betätigung durch die Bedienperson ermöglicht. Die gemeinsame Betätigung mit einer Hand führt zu einer Zwangskopplung der Bewegung der Ventilelemente eines Verteilerventilpaares, so dass keine separaten Mittel, wie beispielsweise Wellen, zum Erreichen einer Kopplung erforderlich sind.

In einer Ausführungsform ist vorgesehen, die von der Bedienperson zu betätigenden Schalthebel in ihrem Griffbereich ergonomisch auszugestalten. Hierfür bieten sich insbesondere abgerundete Formen der freien Enden der Schalthebel an. Zur Erleichterung der gemeinsamen Betätigung der Schalthebel eines Paares kann hierbei insbesondere vorgesehen sein, dass die gemeinsam zu betätigenden Schalthebel an ihren Enden eine jeweils ungefähr halbkugelförmige Ausformung aufweisen, so dass die von einer Hand ergriffenen Schalthebel eines Paares sich in ihrem Griffbereich zu einer Kugelform ergänzen, die in einfacher und sicherer Weise durch die Hand der Bedienperson ergreifbar ist.

In einer Ausführungsform weisen die Schalthebel zur Anordnung in den unterschiedlichen Ebenen jeweils einen gegenüber ihren freien Enden abgekröpften und im Wesentlichen in Richtung der Drehachse des zugeordneten Verteilerventils verlaufenden Distanzabschnitt auf. Ausgehend von seinem freien Ende, das als eine Art Griffbereich von einer Bedienperson ergreifbar ist, weist ein Schalthebel zunächst einen im Wesentlichen in einer Ebene senkrecht zur Drehachse des zugeordneten Verteilerventils verlaufenden länglichen Abschnitt auf, der dann in den abgekröpften Distanzabschnitt übergeht, dessen Länge je nach Anforderungen wählbar ist. Hieran schließt sich ein weiterer zur Befestigung an dem zugeordneten Verteilerventil ausgebildeter Abschnitt des Schalthebels an, der gegebenenfalls wiederum abgekröpft sein kann. Dadurch dass die Ebene, in der der Schwenkbereich eines Schalthebels bei der erfindungsgemäßen Schaltvorrichtung angeordnet ist und im Wesentlichen durch die Längsabmessung des zugehörigen Distanzabschnitts bestimmt ist, ist eine kostengünstige Anpassbarkeit der Lage des Schwenkbereichs erreicht, ohne in die übrigen Bestandteile der Schaltvorrichtung eingreifen zu müssen.

In einer Ausführungsform weisen die Distanzabschnitte der Schalthebel eines Paares eine unterschiedliche Längserstreckung auf. Hierbei kann die Summe der beiden Distanzabschnitte so gewählt sein, dass die beiden Schalthebel eines Paares an die geometrischen Abmessungen der Schaltvorrichtung, insbesondere an den Abstand zwischen den zugeordneten Verteilerventilen angepasst ist.

In einer Ausführungsform sind die Schalthebel jeweils als zweiarmige Hebel ausgeführt, an denen die Bedienperson angreift und bei denen die Arme des Hebels jeweils bezogen auf die Drehachse des zugeordneten Verteilerventils diametral einander gegenüberliegend angeordnet sind. Die Ausbildung der Schalthebel als zweiarmige Hebel erlaubt ein Betätigen der Schalthebel jeweils von zwei Seiten der Schaltvorrichtung, und insbesondere bei symmetrischer Ausgestaltung des zweiarmigen Hebels ist dieser bezüglich seines zentral gelegenen Drehpunkts im Gleichgewicht, was zu einer Vereinfachung der Befestigung des Hebels an dem zugeordneten Verteilerventil und zu einer hemmnisarmen Betätigbarkeit des Hebels führt.

In einer Ausführungsform der erfindungsgemäßen Schaltvorrichtung ist der eine Schalthebel des ersten Paares als Gleichteil des einen Schalthebels des zweiten Paares und der andere Schalthebel des ersten Paares als Gleichteil des anderen Schalthebels des zweiten Paares ausgebildet. Die hierdurch erreichte geringere Zahl unterschiedlicher Teile führt sowohl zu einem Kostenvorteil bei der Herstellung der erfindungsgemäßen Schaltvorrichtung, als auch zu einer vereinfachten Montage.

In einer Ausführungsform der erfindungsgemäßen Schaltvorrichtung ist ein fünftes Ventil in der ersten fluidführenden Verbindung zwischen dem ersten und dem dritten Verteilerventil angeordnet und ein sechstes Ventil zwischen dem zweiten und dem vierten Verteilerventil in der zweiten fluidführenden Verbindung angeordnet. Vorzugsweise ist hierbei das sechste Ventil für die Zufuhr des zu behandelnden Fluids zu der Schaltvorrichtung als Einlassventil ausgeführt, während über das als Auslassventil ausgeführte fünfte Ventil das behandelte Fluid die Schaltvorrichtung wieder verlassen kann.

In einer Ausführungsform sind das fünfte Ventil und das sechste Ventil über eine sie koppelnde Welle betätigbar und an der Welle greift ein weiterer Schalthebel an, dessen Schwenkbereich durch die Anordnung des weiteren Schalthebels in einer von den Ebenen der Schwenkbereiche des ersten Paares Schalthebel und des zweiten Paares Schalthebels unterschiedlichen Ebene kollisionsfrei in den Schwenkbereich des ersten und des zweiten Paares Schalthebel eintreten kann. Durch die koppelnde Welle ist hierbei gewährleistet, dass das fünfte und das sechste Ventil zwangsweise miteinander betätigt werden.

In einer Ausführungsform ist hierbei vorgesehen, den Schwenkbereich des weiteren Schalthebels zwischen den beiden Ebenen der Schwenkbereiche des ersten und des zweiten Paares Schalthebel anzuordnen.

In einer Ausführungsform der erfindungsgemäßen Schaltvorrichtung ist der Schwenkbereich des weiteren Schalthebels in einer solchen Ebene angeordnet, die nur von der jeweiligen Ebene des Schwenkbereichs des ersten oder des zweiten Paares Schalthebel benachbart ist.

In einer Ausführungsform der erfindungsgemäßen Schaltvorrichtung ist der weitere Schalthebel zur gemeinsamen Betätigung des fünften und des sechsten Ventils stangenförmig ausgebildet und durchsetzt in einer Aufnahme geführt die Welle quer zu deren Längserstreckung zumindest teilweise, so dass der weitere Schalthebel in gegenüberliegende Bedienstellungen bringbar ist. In einer Ausführungsform ist hierbei die Aufnahme in ihrem Querschnitt korrespondierend zum Querschnitt der stangenförmig ausgebildeten Welle ausgeführt, insbesondere ist für den Fall einer Welle mit kreisförmigem Querschnitt eine entsprechende Durchgangsbohrung quer zur Längserstreckung der Welle als Aufnahme in dieser vorgesehen.

In einer Ausführungsform der erfindungsgemäßen Schaltvorrichtung ist der Zufluss des Fluids von der Prozessseite der Schaltvorrichtung her über das sechste Ventil in der zweiten fluidführenden Verbindung steuerbar und die Schalthebel des ersten, zweiten, dritten und vierten Verteilerventils sowie der weitere Schalthebel des fünften und sechsten Ventils sind von der der Prozessseite gegenüberliegenden Bedienerseite der Schaltvorrichtung her durch eine Bedienperson betätigbar. Auf der Prozessseite vorgesehene Leitungen zur Zu- oder Abfuhr des zu behandelnden oder behandelten Fluids behindern dergestalt nicht die Betätigung der Schalthebel durch eine Bedienperson.

Die erfindungsgemäße Schaltvorrichtung kann selbstverständlich auch so ausgeführt sein, dass der erste, zweite, dritte und vierte Schalthebel sowie der weitere Schalthebel von der Prozessseite her durch eine Bedienperson erreichbar sind, insbesondere wenn auf der Prozessseite der Schaltvorrichtung eine geeignete, die Bedienperson nicht behindernde, Anordnung der Leitungen zur Zu- oder Abfuhr des zu behandelnden oder behandelten Fluids vorgesehen ist.

Im Folgenden wird eine Schaltvorrichtung zum Schalten eines Fluidstroms zwischen zwei Behandlungseinrichtungen und deren Funktion an Ausführungsbeispielen näher erläutert. In der Zeichnung zeigen:
- Fig. 1: ein Ausführungsbeispiel einer Schaltvorrichtung für einen Fluidstrom, insbesondere für die Leitung eines unter hohem Druck stehenden Fluids in zwei Behandlungseinrichtungen;
- Fig. 2: ein weiteres Ausführungsbeispiel einer Schaltvorrichtung für einen Fluidstrom, insbesondere für die Leitung eines unter hohem Druck stehenden Fluids in zwei Behandlungseinrichtungen;
- Fig. 3 bis 9: jeweils eine schematische Seitenansicht der Behandlungseinrichtung mit jeweils einer mittig dargestellten schematischen Draufsicht auf die Schaltvorrichtung gemäß der Darstellung nach der Fig. 1 in verschiedenen Betriebsphasen beim jeweiligen Umschalten des Fluidstroms von einer Behandlungseinrichtung zu der anderen Behandlungseinrichtung.

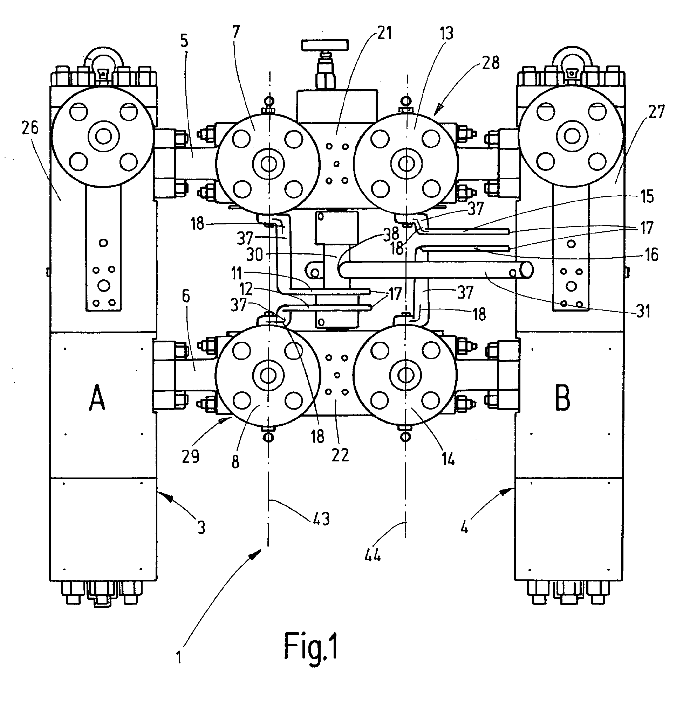

In der Fig. 1 ist ein Ausführungsbeispiel einer Schaltvorrichtung 1 zur Leitung eines Fluids 2 gezeigt, das einen flüssigen oder gasförmigen, zu filtrierenden Prozessstrom darstellt, welcher auch Aerosole aufweisen kann. Das Fluid 2 kann wahlweise in eine erste oder eine zweite Behandlungseinrichtung 3 (= A) bzw. 4 (= B) geleitet werden. Die Behandlungseinrichtungen 3, 4 sind in dem gezeigten Ausführungsbeispiel jeweils mit einem Filtergehäuse ausgebildet, die entsprechende Filterelemente enthalten. Die Schaltvorrichtung 1 dient hierbei insbesondere zur Steuerung des Zuflusses von Fluid 2, über ein Ventil 22 wahlweise in die erste Behandlungseinrichtung 3 oder in die zweite Behandlungseinrichtung 4.

Die Behandlungseinrichtungen 3, 4 sind über eine erste fluidführende Verbindung 5 und eine zweite fluidführende Verbindung 6 miteinander fluidführend verbindbar oder wieder voneinander trennbar. Die fluidführenden Verbindungen 5, 6 sind als druckfeste Rohrleitungen mit Schraubflanschen zwischen den jeweiligen druckfesten Gehäusen 26, 27 der ersten Behandlungseinrichtung 3 und der zweiten Behandlungseinrichtung 4 angeordnet. Die erste fluidführende Verbindung 5 dient zur Abfuhr von filtriertem Fluid 2, während die zweite fluidführende Verbindung 6 zur Zufuhr von unfiltriertem Fluid 2 in die eine oder andere Behandlungseinrichtung 3, 4 vorgesehen ist.

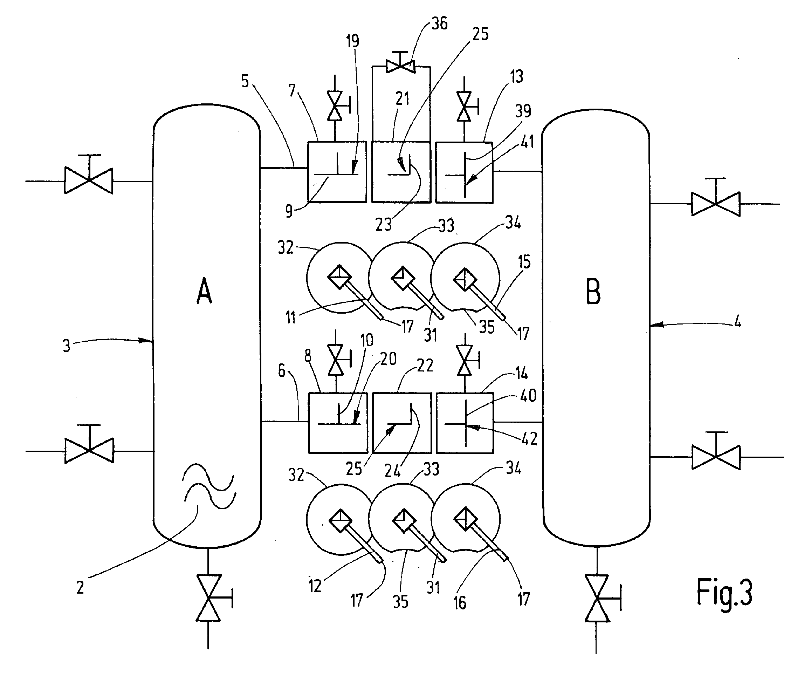

Die Abfuhr von filtriertem Fluid erfolgt über ein Ventil 21, das mittig, in der ersten fluidführenden Verbindung 5 angeordnet ist. Ebenso ist das Ventil 22 in etwa mittig in der zweiten fluidführenden Verbindung 6 angeordnet. Insgesamt befinden sich die beiden Ventile 21, 22 in jeweils einem Ventilblock 28, 29, mit jeweils zwei seitlich angrenzenden Verteilerventilen. In der ersten fluidführenden Verbindung 5 sind mithin zu beiden Seiten des Ventils 21 ein erstes Verteilerventil 7 und ein drittes Verteilerventil 13 in dem Ventilblock 28 angeordnet. In der zweiten fluidführenden Verbindung 6 sind zu beiden Seiten des Ventils 22 ein zweites und ein viertes Verteilerventil 8, 14 in dem weiteren Ventilblock 29 angeordnet. Die Verteilerventile 7, 13 und 8, 14 sind mit als Kugelsegmente ausgebildeten Ventilelementen 9, 10, 39, 40 versehen, deren Durchlassöffnungen 19, 20, 41, 42 jeweils T-förmig ausgestaltet sind (vgl. Fig. 3 bis 9).

Das erste und das zweite Verteilerventil 7, 8 sind der ersten Behandlungseinrichtung 3 benachbart und dieser zugeordnet in dem Sinne, dass sie die jeweiligen fluidführenden Verbindungen 5, 6 zu der ersten Behandlungseinrichtung 3 sperren oder öffnen können. Das dritte und vierte Verteilerventil 13, 14 sind der zweiten Behandlungseinrichtung 4 in gleicher Funktionsweise zugeordnet. In dem gesperrten Zustand der der Behandlungseinrichtung 3 zugeordneten Verteilerventile 7 und 8 oder der der Behandlungseinrichtung 4 zugeordneten Verteilerventile 13 und 14 sind die Behandlungseinrichtungen 3 oder 4 jeweils entleerbar oder für andere Prozessschritte als dem Fluiddurchfluss nutzbar, wie etwa zu Wartungsarbeiten, zum Tausch von Prozessführungselementen, wie Filtern und dergleichen.

Neben der Abfuhrfunktion von Fluid oder Reinigungsmitteln oder dergleichen Prozessstoffe hat das fünfte Ventil 21 mit Hilfe eines integrierten Nadelventils 36 noch die Aufgabe, den Druckausgleich in Vorbereitung der Umschaltung von einer Behandlungseinrichtung zur anderen in den fluidführenden Verbindungen 5, 6 zu bewirken. Alternativ oder ergänzend kann auch beim sechsten Ventil 22 ein dahingehendes Nadelventil vorgesehen sein. Die Ventilelemente 23, 24 des fünften und sechsten Ventils 21, 22 haben L-förmige Durchlassöffnungen 25, die somit ein Umschalten des Zufuhr- oder Abfuhr-Fluidstroms von der ersten Behandlungseinrichtung 3 und der zweiten Behandlungseinrichtung 4 entsprechend steuern können.

Wie insbesondere die Fig. 1 des Weiteren zeigt, sind das erste und zweite sowie das dritte und vierte Verteilerventil 7, 8, 13, 14 mit manuell betätigbaren Schalthebeln 11, 12, 15, 16 versehen. Die Schalthebel 11 und 15 des ersten und dritten Verteilerventils 7, 13 sind hängend an dem jeweiligen Ventilelement angeschraubt, während die Schalthebel 12, 16 in umgekehrter Weise zu den Schalthebeln 11, 15 gerichtet, an den betreffenden Ventilelementen der Verteilerventile 8, 14 von oben her angeschraubt sind. Jede Längsachse 18 eines zugeordneten Schalthebels ist, von dem Ventilelement ausgehend, zu ihrem jeweiligen freien Ende 17 hin betrachtet, gekröpft ausgebildet. Dadurch sind die freien Enden 17 räumlich eng zusammengeführt, allerdings ohne sich gegenseitig zu berühren. So lassen sich die jeweils freien Enden 17 des ersten und zweiten Schalthebels 11, 12 und die freien Enden 17 des dritten und vierten Schalthebels 15, 16 mit einer Hand gemeinsam greifen und synchron die Schalthebel von einer Schaltposition in die anderen führen. Vorzugsweise sind dabei keine Rastungen zu überwinden.

Das aus den dem ersten Verteilerventil 7 zugeordneten Schalthebel 11 und dem aus dem zweiten Verteilerventil 8 zugeordneten Schalthebel 12 gebildete Paar Schalthebel ist in einer senkrecht zu einer Drehachse 43 der Verteilerventile 7, 8 ausgerichteten Ebene angeordnet, die sich von der senkrecht zur Drehachse 44 ausgerichteten Ebene der Anordnung des Paares Schalthebel 15, 16 unterscheidet. Insbesondere ist mit Sicht auf Fig. 1 das Paar Schalthebel 11, 12 unterhalb des Paares Schalthebel 15, 16 angeordnet, so dass die Schalthebel 11 und 12 unbehindert von den Schalthebeln 15 und 16, und zwar egal welche Position die Schalthebel 15, 16 einnehmen, von einer Bedienperson kollisionsfrei betätigbar sind.

Das fünfte und sechste Ventil 21, 22 bzw. deren Ventilelemente 23, 24 sind über eine Welle 30 zwangsgekoppelt und lassen sich nur gemeinsam verdrehen. Zu diesem Zweck weist die Welle 30 einen weiteren, handbetätigbaren Schalthebel 31 auf, der auf dieselbe Seite der Schaltvorrichtung 1 ragend gezeigt ist, wie die übrigen Schalthebel 11, 12, 15, 16, so dass die gesamte Schaltvorrichtung 1 von einer Seite der Schaltvorrichtung 1 her durch eine Bedienperson bedienbar ist.

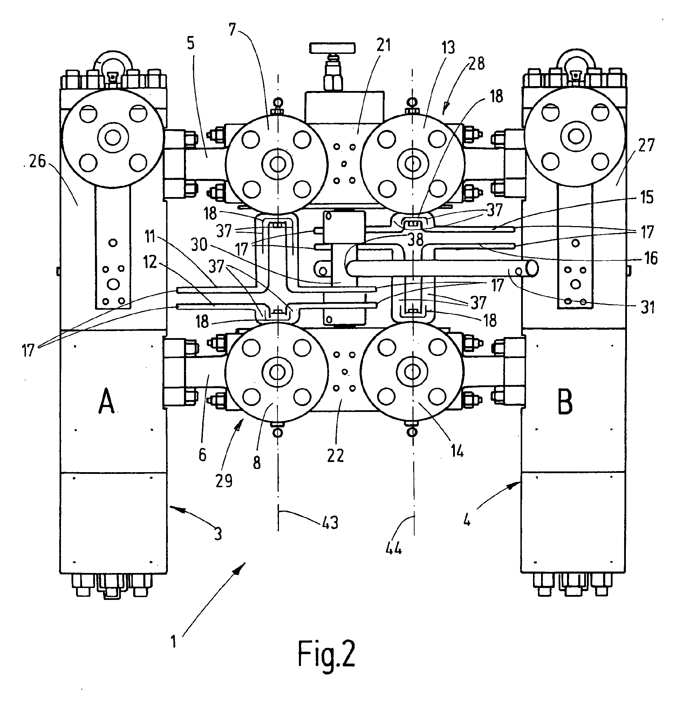

Bei der in der Fig. 2 gezeigten weiteren Ausführungsform der erfindungsgemäßen Schaltvorrichtung sind von der in der Fig. 1 gezeigten Ausführungsform abweichend die Schalthebel 11, 12, 15 und 16 als zweiarmige Hebel ausgeführt, so dass eine Betätigung der zugeordneten Verteilerventile sowohl von der in der Fig. 2 gezeigten Bedienerseite der Schaltvorrichtung als auch von der gegenüberliegenden Prozessseite her von einer Bedienperson möglich ist. Der weitere Schalthebel 31, der die die Ventile 21 und 22 koppelnde Welle 30 zumindest teilweise durchsetzt, lässt sich durch die hierfür vorgesehene Aufnahme 38 in der Welle 30 in Richtung der Prozessseite der Schaltvorrichtung verschieben, so dass auch der weitere Schalthebel 31 in eine Position bringbar ist, in der er von der Prozessseite der Schaltvorrichtung her betätigbar ist. Die Schalthebel 11, 12, 15, 16 sind in der gezeigten Ausführungsform symmetrisch ausgebildet und in ihrem Zentrum jeweils mit den zugeordneten Verteilerventilen 7, 8, 13, 14 verbunden. Als Beispiel sei der Schalthebel 16 näher erläutert. Ausgehend von der Befestigung des Schalthebels 16 an dem Verteilerventil 14 erstrecken sich die beiden symmetrisch angeordneten Distanzabschnitte 37 im Wesentlichen in Richtung der Drehachse 44 des Verteilerventils 14 und bilden so als Schenkel zusammen mit dem nicht näher bezeichneten Befestigungsabschnitt des Schalthebels 16 an dem Verteilerventil 14 eine U-förmige Gestalt aus, wobei der Befestigungsabschnitt als ein die Schenkel verbindendes Joch ausgebildet ist. In Höhe der für den Schwenkbereich des Schalthebels 16 vorgesehenen Ebene sind symmetrisch die beiden sich jeweils bis zu ihren Enden 17 erstreckenden Arme des Schalthebels 16 abgekröpft. In analoger Weise ist der Schalthebel 15 des dritten Verteilerventils 13 bezüglich der Drehachse 44 des Verteilerventils 13 ausgeführt, wobei mit Sicht auf Fig. 2 die Distanzabschnitte 37 des Schalthebels 15 sich ausgehend vom dritten Verteilerventil 13 nach unten hin erstrecken, so dass diese zusammen mit dem Befestigungsabschnitt des Schalthebels 15 eine nach unten hin geöffnete U-förmige Gestalt bilden. In analoger Weise sind auch die Schalthebel 11 des ersten Verteilerventils 7 und 12 des zweiten Verteilerventils 8 ausgebildet, wobei der Schalthebel 11 als Gleichteil des Schalthebels 16 und der Schalthebel 12 als Gleichteil des Schalthebels 15 ausgeführt ist. Mit Sicht auf Fig. 2 sind die beiden Schalthebel 11, 12 symmetrisch zur Drehachse 43 der zugeordneten Verteilerventile 7 und 8 ausgebildet. Die U-förmige Gestalt der Distanzabschnitte 37 und des Befestigungsabschnitts des Schalthebels 12 ist von dem zweiten Verteilerventil 8 wegweisend, nach oben hin geöffnet, wohingegen die durch die Distanzabschnitte 37 und den Befestigungsabschnitt des Schalthebels 11 gebildete U-förmige Gestalt, von dem zugeordneten Verteilerventil 7 wegweisend, bei Sicht auf Fig. 2 nach unten hin geöffnet ist.

Wie die schematisierten Draufsichten gemäß den Darstellungen nach den Fig. 3 bis 9 zeigen, ist der mögliche Umschaltvorgang von einer Behandlungseinrichtung 3 zur andere Behandlungseinrichtung 4 über die Betätigung der jeweiligen Schalthebel unter Einsatz von Steuerscheiben 32, 33, 34 insoweit zwangsgekoppelt. Die Steuerscheiben 32, 33, 34 sind mit den jeweiligen, zuordenbaren Schalthebeln oder Ventilelementen fest verbunden und weisen jeweils einen kreissegmentförmigen Ausschnitt 35 an ihrem Umfangsrand auf. Der Ausschnitt 35 einer jeden Steuerscheibe kann mit einem Umfangsrand der jeweils benachbarten Steuerscheibe dahingehend zusammenwirken, dass eine Drehbewegung ermöglicht oder eben blockiert ist.

Die Fig. 3 zeigt eine Betriebsposition der Schaltvorrichtung 1, in der die erste Behandlungseinrichtung 3 mit Fluid 2 über das sechste Ventil 22 und das zweite Verteilerventil 8 angeströmt wird. Das Fluid 2 verlässt über das erste Verteilerventil 7 und das fünfte Ventil 21 die dahingehend erste Behandlungseinrichtung 3. Die Steuerscheiben 32, 33 der genannten Ventile sind durch die Anlage der Steuerscheiben 32 mit ihren Abschnitten 35 an dem Umfangsrand der Steuerscheiben 33 blockiert. Die zweite Behandlungseinrichtung 4 ist drucklos und über das fünfte Ventil 21 und das dritte Verteilerventil in der ersten fluidführenden Verbindung 5 sowie über das sechste Ventil 22 und das vierte Verteilerventil 14 in der zweiten fluidführenden Verbindung 6 jeweils doppelt abgesperrt von der ersten Behandlungseinrichtung 3 und kann beispielsweise in der dahingehenden Betriebsphase gewartet werden. Die Orientierung der L-förmigen Durchlassöffnung 25 des Ventilelements 23 des fünften Ventils 21 sowie der T-förmigen Durchlassöffnung 41 des Ventilelements 39 des dritten Verteilerventils 13 führen zu der dahingehenden doppelten Absperrung in der ersten fluidführenden Leitung 5. Entsprechend führt die Orientierung der L-förmigen Durchlassöffnung 25 des Ventilelements 24 des sechsten Ventils 22 sowie die Orientierung der T-förmigen Durchlassöffnung 42 des Ventilelements 40 des vierten Verteilerventils 14 in der zweiten fluidführenden Verbindung 6 zu einer doppelten Absperrung der zweiten Behandlungseinrichtung 4 in der zweiten fluidführenden Verbindung 6. So kann in dieser Betriebsphase ein Austausch von nicht näher dargestellten Filterelementen (Altelement gegen Neuelement) stattfinden. In beiden Behandlungseinrichtungen 3, 4 sind ansonsten dieselben Prozessschritte, nämlich eine Filtrierung für das die Filterelemente zu durchströmende Fluid 2, gegebenenfalls ergänzt um eine Vor- und/oder Nachbehandlung durch einen Zyklonabscheider, vorgesehen.

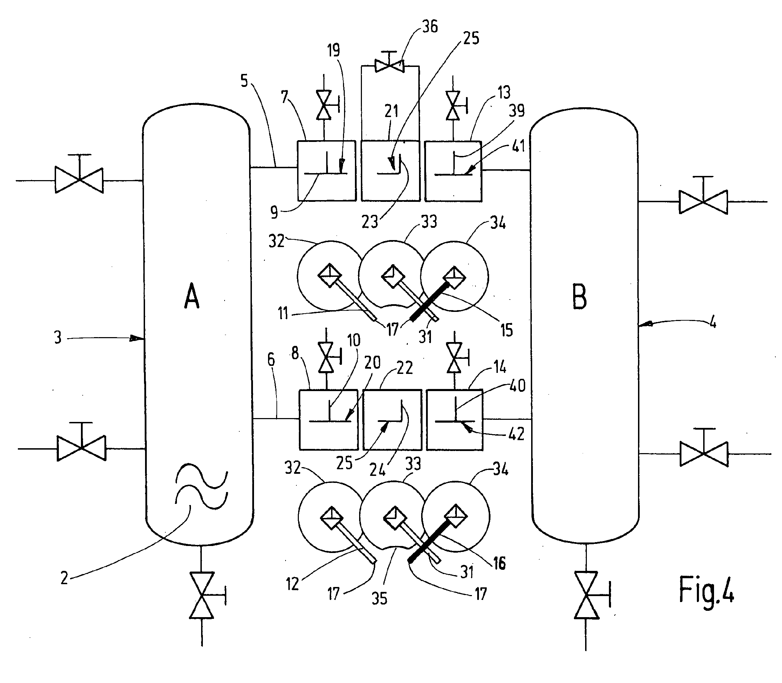

Die weiteren Fig. 4 bis 9 zeigen den Umschaltvorgang an der Schaltvorrichtung 1 von dem Betrieb der ersten Behandlungseinrichtung 3 zu der zweiten Behandlungseinrichtung 4. In der Fig. 4 ist zunächst ein Entsperren der dritten und vierten Verteilerventile 13, 14 aufgezeigt. Deren Schalthebel 15, 16 werden von einer Bedienperson gemeinsam mit einer Hand und in Betrachtungsrichtung auf die Fig. 4 gesehen nach links verschwenkt. Wie der Fig. 4 bei der gezeigten Draufsicht deutlich entnehmbar, kommt es hierbei zu einem Überkreuzen der Schalthebel 15 und 16 über den Schalthebel 31. Dadurch dass das Paar Schalthebel 15, 16 jedoch in einer von dem weiteren Schalthebel 31 unterschiedlichen Ebene angeordnet ist, führt die dahingehende Kreuzung nicht zu einer Kollision der Schalthebel 15, 16 mit dem weiteren Schalthebel 31. Im Vergleich zu der in der Fig. 3 dargestellten Betriebsposition der Schaltvorrichtung 1 verbleiben die übrigen Verteilerventile 7, 8 sowie die Ventile 21, 22 in ihrer gezeigten Schaltposition.

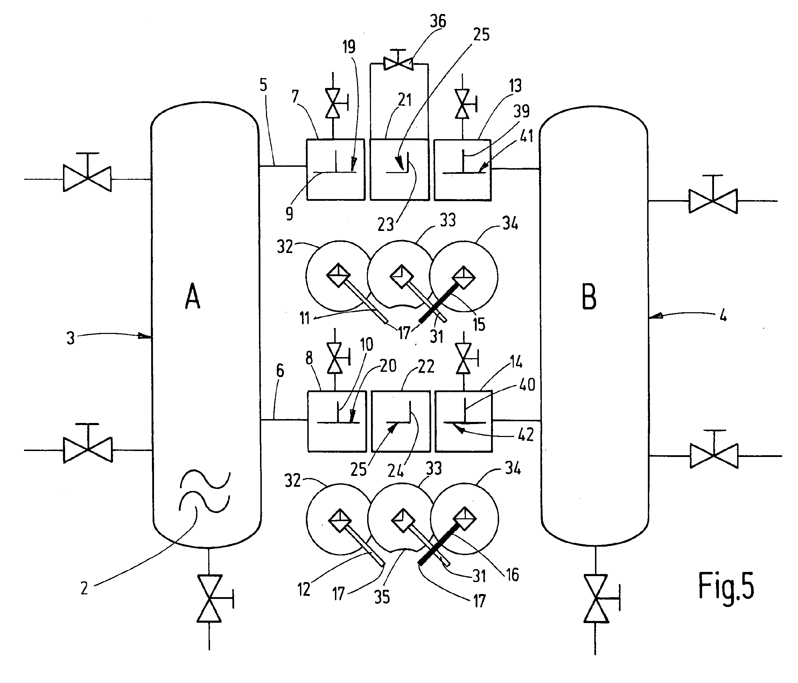

In der Fig. 5 ist ein nachfolgender Druckausgleich zwischen der ersten Behandlungseinrichtung 3 über das Nadelventil 36 gezeigt, das das fünfte Ventil 21 überbrückt. Durch den Druckausgleich wird die zweite Behandlungseinrichtung 4 auf Betriebsdruck gebracht und mit Fluid 2 gefüllt.

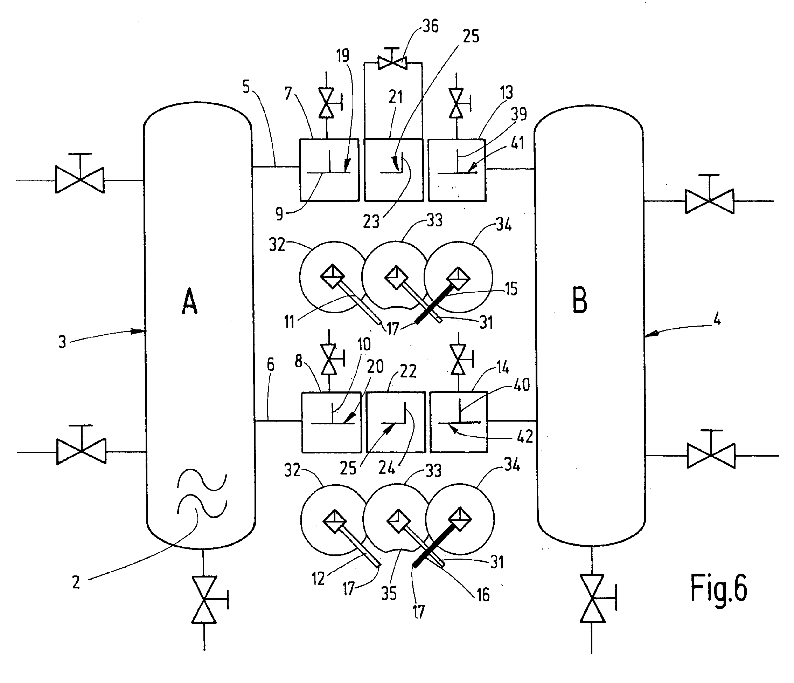

Bei der Betriebsposition gemäß Fig. 6 ist der Druckausgleichsvorgang abgeschlossen, und die zweite Behandlungseinrichtung 4 ist nun komplett mit Fluid 2 gefüllt und steht unter Betriebsdruck.

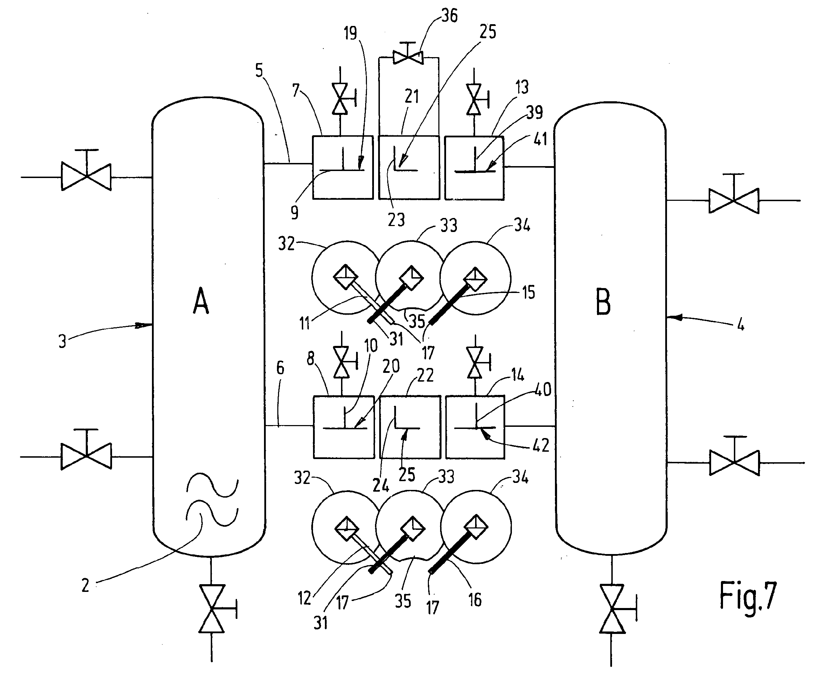

In der Fig. 7 ist das Umschalten von dem Betrieb der ersten Behandlungseinrichtung 3 zu der zweiten Behandlungseinrichtung 4 gezeigt. Dazu wird der weitere Schalthebel 31 an der Welle 30 mit Sicht auf Fig. 7 von rechts nach links verschwenkt. Hierbei kommt es zu einer Kreuzung des weiteren Schalthebels 31 über das Paar Schalthebel 11, 12, was aber durch die erfindungsgemäße Anordnung des Paares Schalthebel 11, 12 in einer Ebene, die sich von der Ebene des weiteren Schalthebels 31 unterscheidet, zu keiner Kollision führt. Das fünfte und das sechste Ventil 21, 22 lenken den Fluidstrom dadurch zu der zweiten Behandlungseinrichtung 4, die nun von Fluid 2 durchströmt wird. Die erste Behandlungseinrichtung 3 steht zwar noch unter Druck, doch tritt hier keine Strömung mehr auf.

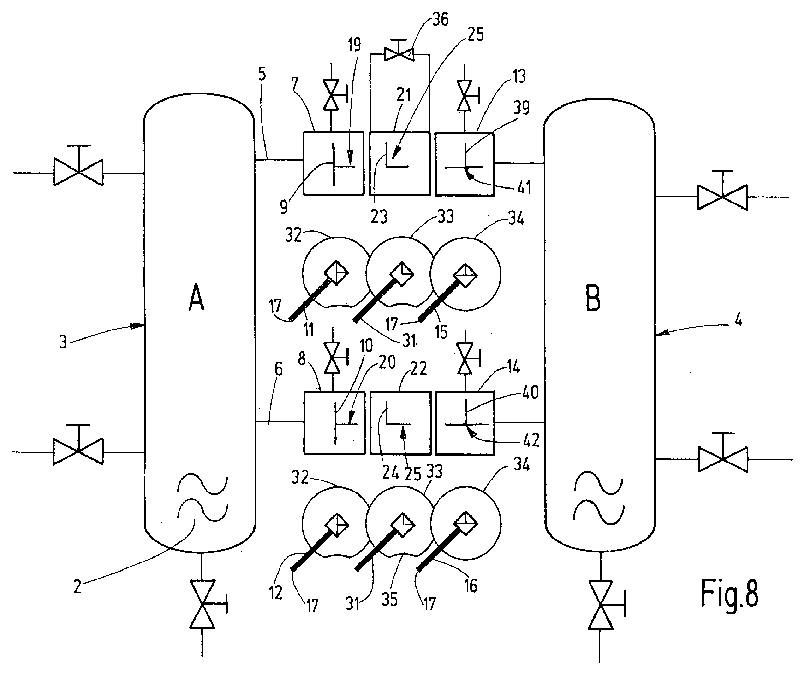

In Fig. 8 erfolgt die zusätzlich Absperrung der ersten Behandlungseinrichtung 3 durch Verschwenken des Paares Schalthebel 11, 12 von rechts nach links, wie beim Vergleich der Draufsichten von Figuren 7 und 8 deutlich wird.

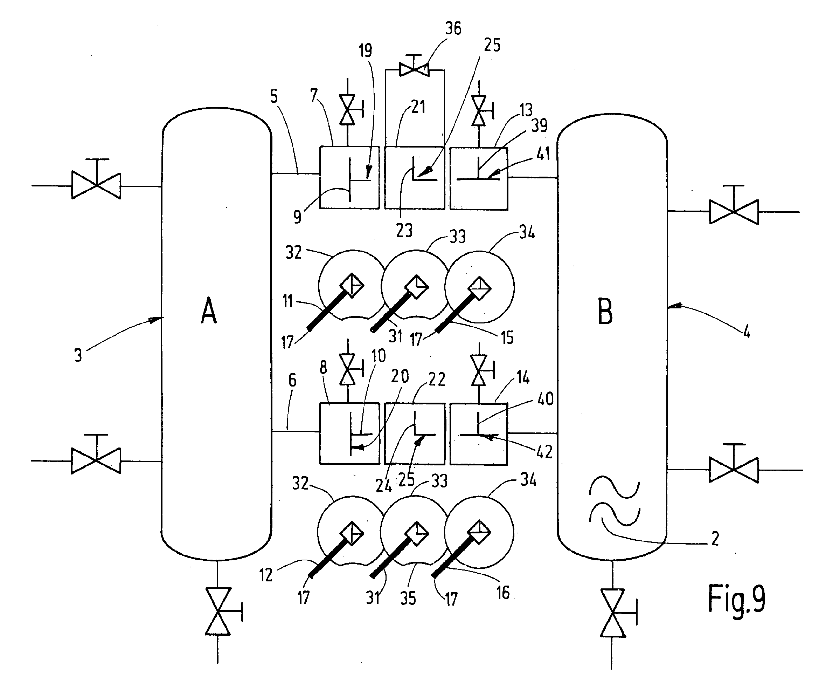

In der Fig. 9 wird das Absenken des Druckes in der ersten Behandlungseinrichtung 3 gezeigt. Die auf den Ventilelementen 9, 10, 23, 24, 39, 40 gezeigten Schaltsymbole stellen den jeweiligen Schaltvorgang sinnfällig für den Betrachter dar.

## Patentansprüche

1. Schaltvorrichtung für einen Fluidstrom, insbesondere für die Leitung eines unter hohem Druck stehenden Fluids (2) von einer ersten Behandlungseinrichtung (3) zu einer zweiten Behandlungseinrichtung (4), wobei in jeder Behandlungseinrichtung (3, 4) das Fluid (2) einem chemischen und/oder physikalischen Prozessschritt unterzogen werden kann, mit einer ersten fluidführenden Verbindung (5) und einer zweiten fluidführenden Verbindung (6) zwischen der ersten und der zweiten Behandlungseinrichtung (3, 4) und mit zumindest einem ersten Verteilerventil (7) und einem dritten Verteilerventil (13) in der ersten fluidführenden Verbindung (5) sowie einem zweiten Verteilerventil (8) und einem vierten Verteilerventil (14) in der zweiten fluidführenden Verbindung (6), wobei die jeweilige Schaltposition der Ventilelemente (9, 10, 39, 40) der Verteilerventile (7, 8, 13, 14) durch zumindest je einen Schalthebel (11, 12, 15, 16) veränderbar ist, **dadurch gekennzeichnet, dass** ein den ersten und zweiten Verteilerventilen (7, 8) zugeordnetes erstes Paar Schalthebel (11, 12) und ein den dritten und vierten Verteilerventilen (13, 14) zugeordnetes zweites Paar Schalthebel (15, 16) vorgesehen und derart in unterschiedlichen Ebenen angeordnet sind, dass die Schalthebel (11, 12) des erstes Paares unbehindert von den Schalthebeln (15, 16) des zweiten Paares, und umgekehrt, von einer Bedienperson betätigbar sind.

2. Schaltvorrichtung nach Anspruch 1, **dadurch gekennzeichnet, dass** das erste (11, 12) und das zweite (15, 16) Paar Schalthebel für das Betätigen des jeweils zugeordneten Verteilerventilpaares (7, 8; 13, 14) von einer Fluid (2) durchlassenden Stellung in eine Fluid (2) sperrende Stellung und umgekehrt einen dem ersten Paar Schalthebel (11, 12) zugeordneten ersten Schwenkbereich und einen dem zweiten Paar Schalthebel (15, 16) zugeordneten zweiten Schwenkbereich definieren, die sich in der Projektion teilweise überlagern und dass durch die Anordnung des ersten (11, 12) und des zweiten (15, 16) Paares Schalthebel in unterschiedlichen Ebenen jedes der beiden Paare in jeder Betätigungsstellung kollisionsfrei in den Schwenkbereich des jeweils anderen Paares Schalthebel eintreten kann.

3. Schaltvorrichtung nach einem der vorhergehenden Ansprüche, **dadurch gekennzeichnet, dass** die Schalthebel (11, 12) des erstes Paares und die Schalthebel (15, 16) des zweiten Paares derart angeordnet sind, dass beide Schalthebel (11, 12; 15, 16) eines Paares jeweils mit einer Hand einer Bedienperson über den gesamten Schwenkbereich gemeinsam betätigbar sind.

4. Schaltvorrichtung nach einem der vorhergehenden Ansprüche, **dadurch gekennzeichnet, dass** die Schalthebel (11, 12, 15, 16) zur Anordnung in den unterschiedlichen Ebenen jeweils einen gegenüber ihren freien Enden abgekröpften und im Wesentlichen in Richtung der Drehachse (43, 44) des zugeordneten Verteilerventils (7, 8, 13, 14) verlaufenden Distanzabschnitt (37) aufweisen.

5. Schaltvorrichtung nach Anspruch 4, **dadurch gekennzeichnet, dass** die Distanzabschnitte (37) der Schalthebel (11, 12; 15, 16) eines Paares eine unterschiedliche Längserstreckung aufweisen.

6. Schaltvorrichtung nach einem der vorhergehenden Ansprüche, **dadurch gekennzeichnet, dass** die Schalthebel (11, 12, 15, 16) jeweils als zweiarmige Hebel ausgeführt sind, an denen die Bedienperson angreift und bei denen die beiden Arme des Hebels, jeweils bezogen auf die Drehachse (43, 44) des zugeordneten Verteilerventils (7, 8, 13, 14), diametral einander gegenüberliegend angeordnet sind.

7. Schaltvorrichtung nach einem der vorhergehenden Ansprüche, **dadurch gekennzeichnet, dass** der eine Schalthebel (11) des ersten Paares als Gleichteil des einen Schalthebels (16) des zweiten Paares und dass der andere Schalthebel (12) des ersten Paares als Gleichteil des anderen Schalthebels (15) des zweiten Paares ausgebildet ist.

8. Schaltvorrichtung nach einem der vorhergehenden Ansprüche, **dadurch gekennzeichnet, dass** ein fünftes Ventil (21) in der ersten fluidführenden Verbindung (5) zwischen dem ersten und dem dritten Verteilerventil (7, 13) angeordnet ist und ein sechstes Ventil (22) zwischen dem zweiten und dem vierten Verteilerventil (8, 14) in der zweiten fluidführenden Verbindung (6) angeordnet ist.

9. Schaltvorrichtung nach Anspruch 8, **dadurch gekennzeichnet, dass** das fünfte Ventil (21) und das sechste Ventil (22) über eine sie koppelnde Welle (30) betätigbar sind und dass an der Welle (30) ein weiterer Schalthebel (31) angreift, dessen Schwenkbereich, durch die Anordnung des weiteren Schalthebels (31) in einer von den Ebenen der Schwenkbereiche des ersten Paares Schalthebel (11, 12) und des zweiten Paares Schalthebel (15, 16) unterschiedlichen Ebene, kollisionsfrei in den Schwenkbereich des ersten (11, 12) und des zweiten (15, 16) Paares Schalthebel eintreten kann.

10. Schaltvorrichtung nach Anspruch 9, **dadurch gekennzeichnet, dass** der weitere Schalthebel (31) zur gemeinsamen Betätigung des fünften (21) und des sechsten (22) Ventils stangenförmig ausgebildet ist und in einer Aufnahme (38) geführt die Welle (30) quer zu deren Längserstreckung zumindest teilweise durchsetzt, so dass der weitere Schalthebel (31) in gegenüberliegende Bedienstellungen bringbar ist.

11. Schaltvorrichtung nach einem der vorhergehenden Ansprüche 8-10, **dadurch gekennzeichnet, dass** von der Prozessseite der Schaltvorrichtung her der Zufluss des Fluids (2) über das sechste Ventil (22) in der zweiten Fluid (2) führenden Verbindung (6) steuerbar ist und dass die Schalthebel (11, 12, 15, 16) und der weitere Schalthebel (31) von der der Prozessseite gegenüberliegenden Bedienerseite der Schaltvorrichtung her durch eine Bedienperson betätigbar sind.

## Claims

1. A switching apparatus for a fluid flow, in particular for conducting a high pressure fluid (2) from a first treatment device (3) to a second treatment device (4), in each treatment device (3, 4) the fluid (2) being able to be subjected to a chemical and/or physical process step, comprising a first fluid-conveying connection (5) and a second fluid-conveying connection (6) between the first and the second treatment device (3, 4), and comprising at least a first distributor valve (7) and a third distributor valve (13) in the first fluid-conveying connection (5) as well as a second distributor valve (8) and a fourth distributor valve (14) in the second fluid-conveying connection (6), the respective switching position of the valve elements (9, 10, 39, 40) of the distributor valves (7, 8, 13, 14) being variable by means of at least one respective switching lever (11, 12, 15, 16), **characterised in that** a first pair of switching levers (11, 12) assigned to the first and second distributor valves (7, 8) and a second pair of switching levers (15, 16) assigned to the third and fourth distributor valves (13, 14) are provided and arranged in different planes such that the switching levers (11, 12) of the first pair can be actuated by an operator without being impeded by the switching levers (15, 16) of the second pair and vice versa.

2. The switching apparatus according to Claim 1, **characterised in that** the first (11, 12) and the second (15, 16) pair of switching levers for actuating the respectively assigned pair of distributor valves (7, 8; 13, 14) from a fluid (2)-passing position into a fluid (2)-blocking position and vice versa define a first pivoting range, which is assigned to the first pair of switching levers (11, 12), and a second pivoting range, which is assigned to the second pair of switching levers (15, 16), these two pivoting ranges partially overlapping in the projection, and that due to the arrangement of the first (11, 12) and the second (15, 16) pair of switching levers in different planes, each of the two pairs are able to enter in a collision-free manner into the pivoting range of the respective other pair of switching levers in any actuating position.

3. The switching apparatus according to any of the preceding claims, **characterised in that** the switching levers (11, 12) of the first pair and the switching levers (15, 16) of the second pair are arranged such that both switching levers (11, 12; 15, 16) of a pair can respectively be jointly actuated over the entire pivoting range with one hand of an operator.

4. The switching apparatus according to any of the preceding claims, **characterised in that** the switching levers (11, 12, 15, 16) respectively have a spacer section (37) that is bent relative to their free ends and that extends substantially in the direction of the axis of rotation (43, 44) of the assigned distributor valve (7, 8, 13, 14) in order to arrange the switching levers in the different planes.

5. The switching apparatus according to Claim 4, **characterised in that** the spacer sections (37) of the switching levers (11, 12; 15, 16) of a pair have varying longitudinal extensions.

6. The switching apparatus according to any of the preceding claims, **characterised in that** the switching levers (11, 12, 15, 16) are respectively designed as two-armed levers which the operator grasps, and the two arms of the lever are respectively arranged diametrically opposite each other in relation to the axis of rotation (43, 44) of the assigned distributor valve (7, 8, 13, 14).

7. The switching apparatus according to any of the preceding claims, **characterised in that** the one switching lever (11) of the first pair is designed as an identical part of one switching lever (16) of the second pair, and that the other switching lever (12) of the first pair is designed as an identical part of the other switching lever (15) of the second pair.

8. The switching apparatus according to any of the preceding claims, **characterised in that** a fifth valve (21) is arranged between the first and the third distributor valve (7, 13) in the first fluid-conveying connection (5), and a sixth valve (22) is arranged between the second and the fourth distributor valve (8, 14) in the second fluid-conveying connection.

9. The switching apparatus according to Claim 8, **characterised in that** the fifth valve (21) and the sixth valve (22) can be actuated by means of a shaft (30) that couples said fifth and sixth valves, and that an additional switching lever (31) engages with the shaft (30), the arrangement of the additional switching lever (31) in a plane that is different from the planes of the pivoting ranges of the first pair of switching levers (11, 12) and the second pair of switching levers (15, 16) enabling the pivoting range of this additional switching lever to enter into the pivoting range of the first (11, 12) and the second (15, 16) pair of switching levers without any collision.

10. The switching apparatus according to Claim 9, **characterised in that** the additional switching lever (31) for jointly actuating the fifth (21) and the sixth (22) valve is designed as a rod and at least partially penetrates, guided in a receptacle (38), the shaft (30) transversely to the longitudinal extension of said shaft, so that the additional switching lever (31) can be brought into the opposite operating positions.

11. The switching apparatus according to any of the preceding Claims 8-10, **characterised in that** from the process side of the switching apparatus the inflow of fluid (2) can be controlled by means of the sixth valve (22) in the second fluid (2)-conveying connection (6), and that the switching levers (11, 12, 15, 16) as well as the additional switching lever (31) can be actuated by an operator from the operator side of the switching apparatus that is located opposite the process side.

## Revendications

1. Dispositif de commutation pour un courant de fluide, notamment pour conduire un fluide (2) sous haute pression d'un premier dispositif (3) de traitement à un deuxième dispositif (4) de traitement, le fluide (2) pouvant, dans chaque dispositif (3, 4) de traitement, être soumis à un stade de processus chimique et/ou physique, comprenant une première liaison (5) de conduite de fluide et une deuxième liaison (6) de conduite de fluide entre le premier et le deuxième dispositifs (3, 4) de traitement et au moins une première vanne (7) formant répartiteur et une troisième vanne (13) formant répartiteur dans la première liaison (5) de conduite de fluide, ainsi qu'une deuxième vanne (8) formant répartiteur et une quatrième vanne (14) formant répartiteur dans la deuxième liaison (6) de conduite de fluide, la position de commutation respective des éléments (9, 10, 39, 40) des vannes (7, 8, 13, 14) formant répartiteur pouvant être modifiée par au moins respectivement un levier (11, 12, 15, 16) de commutation, **caractérisé en ce qu'**il est prévu et il est disposé dans des plans différents une première paire de leviers (11, 12) de commutation associée à la première et à la deuxième vannes (7, 8) formant répartiteur et une deuxième paire de leviers (15, 16) de commutation associée à la troisième et à la quatrième vannes (13, 14) formant répartiteur de manière à ce que les leviers (11, 12) de commutation de la première paire puissent être manoeuvrés par un opérateur sans être gêné par les leviers (15, 16) de commutation de la deuxième paire et inversement.

2. Dispositif de commutation suivant la revendication 1, **caractérisé en ce que** la première (11, 12) et la deuxième (15, 16) paires de leviers de communication définissent, pour l'actionnement de la paire (7, 8, 13, 14) de vannes formant répartiteur associé respectivement d'une position laissant passer le fluide (2) à une position empêchant le fluide (2) de passer et inversement, une première plage de pivotement associée à la première paire de leviers (11, 12) de commutation et une deuxième plage de pivotement associée à la deuxième paire de leviers (15, 16) de commutation, qui en projection se superposent en partie et **en ce que**, en mettant la première (11, 12) et la deuxième (15, 16) paires de leviers de commutation dans des plans différents, chacune des deux paires peut, en chaque position d'actionnement, entrer sans collision dans la plage de pivotement de l'autre paire de leviers de commutation.

3. Dispositif de commutation suivant l'une des revendications précédentes, **caractérisé en ce que** les leviers (11, 12) de commutation de la première paire et les leviers (15, 16) de commutation de la deuxième paire sont disposés de manière à pouvoir actionner conjointement les deux leviers (11, 12, 15, 16) de commutation d'une paire respectivement par la main d'un opérateur sur toute la plage de pivotement.

4. Dispositif de commutation suivant l'une des revendications précédentes, **caractérisé en ce que** les leviers (11, 12, 15, 16) de commutation ont, afin d'être disposés dans les plans différents, respectivement une partie (37) de mise à distance coudée vers son extrémité libre et s'étendant sensiblement dans la direction de l'axe (43, 44) de rotation de la vanne (7, 8, 13, 14) formant répartiteur associée.

5. Dispositif de commutation suivant la revendication 4, **caractérisé en ce que** les parties (37) de mise à distance des leviers (11, 12, 15, 16) de commutation d'une paire ont une étendue en longueur différente.

6. Dispositif de commutation suivant l'une des revendications précédentes, **caractérisé en ce que** les leviers (11, 12, 15, 16) de commutation sont réalisés respectivement sous la forme d'un levier à deux bras, que l'opérateur manoeuvre et dans lesquels les deux bras du levier sont, par rapport à l'axe (43, 44) de rotation de la vanne (7, 8, 13, 14) formant répartiteur associée, opposés diamétralement l'un à l'autre.

7. Dispositif de commutation suivant l'une des revendications précédentes, **caractérisé en ce que** l'un des leviers (11) de commutation de la première paire est constitué sous la forme d'une pièce pareille à l'un des leviers (16) de commutation de la deuxième paire et **en ce que** l'autre levier (12) de commutation de la première est constitué sous la forme d'une pièce pareille à l'autre levier (15) de commutation de la deuxième paire.

8. Dispositif de commutation suivant l'une des revendications précédentes, **caractérisé en ce qu'**une cinquième vanne (21) est montée dans la première liaison (5) de conduite de fluide entre la première et la troisième vannes (7, 13) formant répartiteur et une sixième vanne (22) est montée dans la deuxième liaison (6) de conduit de fluide entre la deuxième et la quatrième vannes (8, 14) formant répartiteur.

9. Dispositif de commutation suivant la revendication 8, **caractérisé en ce que** la cinquième vanne (21) et la sixième vanne (22) peuvent être actionnées par un arbre (30) les accouplant et ce que l'arbre (30) est attaqué par un autre levier (31) de commutation dont la plage de pivotement peut, par l'agencement de l'autre levier (31) de commutation dans un plan différent des plans de plages de pivotement de la première paire de leviers (11, 12) de commutation et de la deuxième paire de leviers (15, 16) de commutation, entrer sans collision dans la plage de pivotement de la première (11, 12) et de la deuxième (15, 16) paires de leviers de commutation.

10. Dispositif de commutation suivant la revendication 9, **caractérisé en ce que** l'autre levier (31) de commutation est, pour l'actionnement conjoint de la cinquième (21) et de la sixième (22) vannes, en forme de tige et, en étant guidé dans un logement (38), traverse au moins en partie l'arbre (30) transversalement à son étendue longitudinale de sorte que l'autre levier (31) de commutation peut être mis en des positions de manoeuvre opposées.

11. Dispositif de commutation suivant l'une des revendications 8 à 10, **caractérisé en ce que** l'afflux de fluide (2) par la sixième vanne (22) dans la deuxième liaison (6) de conduite de fluide peut être commandé à partir du côté de processus du dispositif de commutation et **en ce que** les leviers (11, 12, 15, 16) de commutation et l'autre levier (31) de commutation peuvent être actionnés par un opérateur à partir du côté de service du dispositif de commutation opposé au côté de processus.
